# EUROPEAN PATENT APPLICATION

(11) **EP 4 450 657 A1**
(43) Date of publication of application: **23.10.2024**
(21) Application number: 22907971.0
(22) Date of filing: 15.12.2022
(51) Int. Cl.: C22B 26/12, C22B 3/20, C22B 1/02

(54) **RECOVERY METHOD OF LITHIUM ION**

(30) Priority: 17.12.2021 KR 20210181816
(71) Applicant: POSCO Co., Ltd, Pohang-si, Gyeongsangbuk-do 37859 (KR); RESEARCH INSTITUTE OF INDUSTRIAL SCIENCE & TECHNOLOGY, Pohang-si, Gyeongsangbuk-do 37673 (KR)
(72) Inventor: HAN, Gi-Chun, Cheongju-si, Chungcheongbuk-do 28661 (KR); SON, Young Geun, Pohang-si, Gyeongsangbuk-do 37669 (KR); KIM, Sang Won, Pohang-si, Gyeongsangbuk-do 37637 (KR); JEUNG, Kee Uek, Pohang-si, Gyeongsangbuk-do 37656 (KR); KIM, Seung Goo, Seoul 01780 (KR); LEE, Seung Seok, Pohang-si, Gyeongsangbuk-do 37673 (KR); KO, Young-Seon, Seoul 07694 (KR)
(74) Representative: Nederlandsch Octrooibureau
(86) International application number: PCT/KR2022/020481
(87) International publication number: WO 2023/113504

(57) **Abstract**

It is provided a method of recovery lithium ion, comprising:
adding a residue after leaching lithium from an ore containing spodumene into a solution in which a lithium ion is dissolved; absorbing a lithium ion into the residue by reacting the solution containing the residue at 50-90°C; and recovering a cake containing a lithium from the residue in which the lithium ion has been absorbed by performing solid-liquid separation.

## Description

### FIELD OF THE INVENTION

The present exemplary embodiment relates to a lithium ion recovery method. More particularly, the present disclosure relates to a method for selectively recovering lithium ions among solutions.

### DESCRIPTION OF THE RELATED ART

Lithium is a key element in lithium ion battery and is a very important material in the development of environmentally-friendly technology.

Lithium is collected from brine, ore, or waste-water. In the case of a solution containing lithium, it is recovered in the form of lithium carbonate or lithium hydroxide after going through a process to remove impurity. The impurity of this lithium salt is strictly limited in the final industry, so the impurity must be removed as much as possible before recovering the lithium salt.

Impurities dissolved with lithium include Mg, Ca, Al, Si, Na, K, Fe, etc. Among these, divalent or trivalent ions can be removed relatively easily by adjusting pH or using a precipitation agent.

However, since most of the salts of Na and K have high solubility and cannot be removed by precipitation method, lithium adsorption agents, ion exchange resins, etc. are being researched.

The lithium adsorption agent is a method based on aluminum hydroxide, etc., and its use is limited because it dissolves in acidic or alkali solutions rather than neutral, and the selectivity of ion-exchange resin to lithium is still significantly low.

As described above, since potassium and sodium ions are inevitably present along with lithium ions in solutions treated from brine, ore or waste-water containing lithium, if a technology to selectively separate lithium ions is developed, the purity of lithium salt will increase and processing efficiency can be increased.

### SUMMARY OF THE INVENTION

The present exemplary embodiment provides a lithium ion recovery method that can selectively separate lithium ions from a solution in which lithium ions are dissolved.

The recovery method of lithium ion according to an exemplary embodiment includes:
adding a residue after leaching lithium from an ore containing spodumene into a solution in which a lithium ion is dissolved; absorbing a lithium ion into the residue by reacting the solution containing the residue at 50-90°C; and recovering a cake containing a lithium from the residue in which the lithium ion has been absorbed by performing solid-liquid separation.

In the step of adding the residue, the amount of constant dried residue is preferably 100-500g per 1L of solution in which lithium ion is dissolved, and more preferably 100-300g.

In the step of absorbing the lithium ion into the residue, the reaction is preferably carried out for 0.5-7 hours.

In the step of absorbing the lithium ion into the residue, the reaction is preferably performed at pH 7 or higher.

In a solution in which the lithium ion is dissolved, the concentration of the lithium ion is preferably 0.01-32g/L.

The solution in which the lithium ion is dissolved contains sodium and potassium as impurities, and the concentration of the impurity is preferably 0.01-30g/L.

The step of absorbing the lithium ion into the residue can be performed under stirring.

The step of adding the residue can be performed by adding a solution in which the lithium ion is dissolved in the column filled with the residue.

The residue after leaching a lithium from the ore containing spodumene can be manufactured by a method including the steps below:
heating and then cooling the ore containing the spodumene; mixing the cooled ore with sulfuric acid, heating and then cooling; mixing the cooled product with water, stirring it, and then separating solid and liquid; and washing the solid-liquid separated cake with distilled water and drying it.

The residue can comprise, 0 to 1 wt% lithium (Li), 5 to 20 wt% aluminum (Al), 20 to 40 wt% of silicon (Si), 0 to 1 wt% magnesium (Mg), 0 to 5 wt% calcium (Ca), 0 to 1 wt% sodium (Na), 0 to 1 wt% potassium (K), 0 to 5 wt% sulfur (S), 0 to 1 wt% of manganese (Mn), 0 to 1 wt% iron (Fe), and/or 0 to 1 wt% phosphorus (P).

The lithium ion recovery method according to the exemplary embodiment may further include the step of removing the layer water from the lithium-containing cake using distilled water.

The lithium ion recovery method according to the exemplary embodiment may further include dissolving the lithium ion by dissolving the lithium-containing cake into an inorganic acid solution to dissolve the lithium from the cake. The inorganic acid is preferably one selected from the group consisting of sulfuric acid, hydrochloric acid, and nitric acid.

The lithium ion recovery method according to the exemplary embodiment further includes the step of mixing the lithium-containing cake with high concentration sulfuric acid, subjecting it to heat treatment at 150-300°C, and then adding it to distilled water to dissolve the lithium ion. The heat treatment is preferably performed for more than 10 minutes.

According to an exemplary embodiment, lithium can be selectively recovered from a solution containing lithium ions and heterogeneous ions.

Additionally, according to an exemplary embodiment, lithium can be leached from ore containing spodumene and the remaining residue can be recycled.

### BRIEF DESCRIPTION OF THE DRAWINGS

FIG. 1 briefly shows the process diagram for recovering lithium ions in solution according to an exemplary embodiment.
FIG. 2 shows the Na/Li ratio in the liquid filtrate according to the amount of remaining material (residue) after lithium leaching when reacting for 7 hours to recover lithium ions in the solution according to an exemplary embodiment.
FIG. 3 is the mineral analysis result of the material in which lithium was recovered after 7 hours of reaction to recover lithium ions in solution, according to an exemplary embodiment.

### DETAILED DESCRIPTION OF THE EMBODIMENTS

The terminology used herein is only intended to refer to specific exemplary embodiments and is not intended to limit the present invention. Singular forms used herein include plural forms as long as phrases do not clearly indicate an opposite meaning. The term "including/comprising/containing" as used herein concretely indicates specific characteristics, regions, integer numbers, steps, operations, elements, and/or components, and is not to exclude presence or addition of other specific characteristics, regions, integer numbers, steps, operations, elements, and/or components.

Unless defined otherwise, all terms including technical terms and scientific terms as used herein have the same meaning as the meaning generally understood by a person of an ordinary skill in the art to which the present invention pertains. Terms defined in a generally used dictionary are additionally interpreted as having the meaning matched to the related art document and the currently disclosed contents and are not interpreted as ideal or formal meaning unless defined.

Hereinafter, an exemplary embodiment will be described in detail so that a person of an ordinary skill can easily practice it in the technical field to which the present invention belongs. As those skilled in the art would realize, the described embodiments may be modified in various different ways, all without departing from the spirit or scope of the present invention.

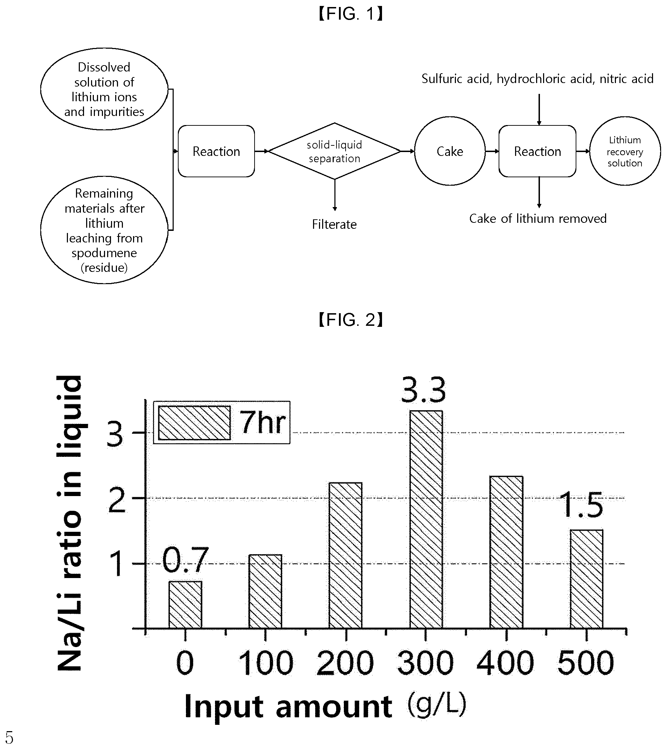

An exemplary embodiment provides a method for recovering lithium ions in solution using the remaining material (residue) after leaching lithium from ore containing spodumene through calcination, roasting, and leaching. FIG. 1 briefly shows the process diagram for recovering lithium ions in solution according to this exemplary embodiment.

According to FIG. 1, the residue after lithium leaching from spodumene is put into a solution in which lithium ion and impurity are dissolved. Lithium is absorbed into the residue, solid-liquid separation is performed, and lithium-containing material (cake) is recovered from the lithium-absorbed residue. Furthermore, lithium is recovered by adding inorganic acids such as sulfuric acid, hydrochloric acid, and nitric acid to react with the lithium-containing material (cake) to dissolve lithium from the lithium-containing material (cake).

This will be described in more detail below.

### Manufacture of remaining material (residue) after lithium leaching from spodumene

First, one of the methods for producing the remaining material (residue) after lithium leaching from spodumene is explained as follows.

The ore containing spodumene is heated at 1,000-1,200 °C for more than 30 minutes. At this time, the heating temperature and heating time can be determined depending on the particle size of the ore. If the particle is large, the heating temperature can be increased and the heating time can be lengthened. The ore cooled after heating is mixed with sulfuric acid. Cooling can be performed by air cooling. The mixing ratio of ore and sulfuric acid is preferably 10 to 40 sulfuric acid per 100 ore. Heat the ore mixed with sulfuric acid at 150-300oC for more than 30 minutes. Heating temperature and heating time can be determined depending on the particle size of the ore. At this time, the hydrogen of sulfuric acid is exchanged with the lithium of the ore, and lithium becomes lithium sulfate, which is easily soluble in water.

The heat treatment product in the form of the lithium sulfate is mixed with water at room temperature and stirred. The mixing ratio of the heat treatment product and water is preferably a weight ratio of 100 to 1,000 water per 100 heat treatment product. At this time, the lithium in the heat treatment product converted to the form of lithium sulfate is dissolved in water. When dissolving lithium, Ca(OH)₂ can be added to adjust pH, which can reduce Al and Si ions dissolved with lithium. It is preferable to add 5-20wt% of Ca(OH)₂ to the weight of the heat treatment product. The ore in which lithium is dissolved has the same form as HAlSi₂O₆.

The cake obtained by performing solid-liquid separation after stirring is washed with distilled water and dried to constant weight to prepare the residue.

### Absorption of lithium ion

After leaching lithium from the spodumene, the remaining material (residue) is put into a solution in which lithium ion is dissolved and the lithium ion is absorbed into the residue.

At this time, it is preferable to add 100-500g of dried material (residue) per 1L of solution in which lithium ion is dissolved, and it is even more preferable to add 100-300g. If the input amount is less than the lower limit of the range, absorption efficiency per hour decreases, and if it exceeds the upper limit of the range, absorption efficiency decreases relative to the input amount.

The reaction in which lithium ion is absorbed into the residue is preferably carried out at 50-100 °C. The higher the temperature, the faster the absorption speed of lithium ion. If the reaction temperature is below the lower limit of the range, problems may occur in which the lithium absorption speed and amount of lithium absorption are lowered, and if the reaction temperature exceeds the upper limit of the range, problems may occur in which it cannot be implemented in an aqueous solution.

The reaction in which lithium ion is absorbed into the residue is preferably carried out for 0.5-7 hours, more preferably 3-7 hours. If the reaction time is below the lower limit of the range, the amount of reaction is small, and if it exceeds the upper limit of the range, lithium absorption no longer increases significantly even as the time increases.

In a solution in which the lithium ion is dissolved, the lithium ion concentration is preferably 0.01g/L-32g/L.

The solution in which the lithium ion is dissolved may contain impurities such as sodium and potassium, and the concentration of these impurities is preferably 0.01g/L-30g/L. When the concentration of the impurity exceeds the upper limit of the range, lithium absorption tends to decrease.

At the stage when the lithium ion is absorbed into the residue, the pH of the solution is preferably above 7. If the pH is below the range and the solution in which lithium is dissolved is acidic, the absorption of lithium ions is deteriorated.

As another method of absorbing lithium ions into the residue, the remaining material (residue) after lithium leaching from spodumene is filled in a column, etc., and then a solution containing lithium ions dissolved in the column is allowed to flow through the column to absorb the lithium ions into the residue.

### Recovery of material containing lithium (cake)

After leaching lithium from spodumene, the remaining material (residue) is put into a solution containing lithium ion, and the slurry residue, which has absorbed lithium ion, is recovered as a cake-shaped material containing lithium through solid-liquid separation. At this time, the layer water in the cake can be removed using distilled water.

### Recovery of lithium ions from lithium-containing material (cake)

In order to recover lithium ions from a material containing lithium (cake), the material containing lithium (cake) is put into an inorganic acid solution to convert the cake into lithium ion form and dissolve the lithium ion. At this time, the inorganic acid can be sulfuric acid, hydrochloric acid, nitric acid, etc.

As another method of recovering lithium ions from a lithium-containing material (cake), a dissolving method can be used. The lithium-containing material (cake) is mixed with high concentration sulfuric acid, subjected to heat treatment at 150-300 °C, and then placed in distilled water to recover lithium ions. Heat treatment time varies depending on the heat treatment temperature, and usually 10 minutes or more is sufficient at 250°C.

In this way, the impurity concentration of the solution in which lithium ions are dissolved is greatly reduced, and lithium ions can be effectively recovered from this.

Below, a specific exemplary embodiment of the present invention is described. However, the exemplary embodiment below is only a specific exemplary embodiment of the present invention, and the present invention is not limited to the exemplary embodiment below.

### (Preparation Example 1) Production of remaining material (residue) after lithium leaching from spodumene

100g of ore containing spodumene was placed in a crucible, heat treated at 1,100 °C for 1 hour, and then air cooled. The heat treatment product and sulfuric acid 98% were mixed in a weight ratio of 100:23 and heat treated at 250°C for 1 hour. The heat treatment product and distilled water were mixed at a weight ratio of 1:2, stirred for 30 minutes, and then separated into solid and liquid. At this time, after 10 minutes of stirring, 10% of Ca(OH)₂ by weight of the heat treatment product was added. After 30 minutes of stirring, solid-liquid separation was performed, and the cake formed by solid-liquid separation was washed with distilled water three times as much as the cake. The washed cake was dried at 45 °C to constant weight to obtain a residue.

The following Table 1 is the chemical composition of the dried material (residue).

**(Table 1)**

| Atom | Li | Al | Si | Mg | Ca | Na | K | S | Mn | Fe | P | O etc. |
|---|---|---|---|---|---|---|---|---|---|---|---|---|
| Content (wt%) | 0.3 | 11.6 | 25.8 | 0.1 | 3.3 | 0.1 | 0.4 | 3.1 | 0.1 | 0.6 | 0.1 | remain |

### (Preparation Example 2) Preparation of lithium ion solution

A solution containing lithium ion and impurity was prepared. The composition of the prepared solution is shown in the following Table 2. The pH is 12.7.

**(Table 2)**

| Atom | Li | S | K | Na | Si |
|---|---|---|---|---|---|
| concentration(mg/L) | 24.6 | 6.1 | 6.0 | 17.7 | 0.01 |

### (Example embodiment 1) Recovery of material containing lithium (cake)

The dried material (residue) prepared in Preparation Example 1 was added to 1L of the lithium ion solution prepared in the Preparation Example 2 and reacted to obtain a slurry-like material in which the lithium ion was absorbed into the residue. The temperature during reaction was 90 °C and the stirring speed was 300rpm. Then, the slurry was separated into solid and liquid using a filtration device to obtain a material containing lithium (cake).

In the process of recovering the material containing lithium (cake) described above, the amount of residue was changed to 100-500 g, and samples were collected during the reaction by adjusting the reaction time to 3, 5, and 7 hours for each amount. The collected sample was separated into solid and liquid, and the ion concentration of the liquid filtrate was measured, and the results are listed in the following Table 3.

As can be seen in the following Table 3, the lithium concentration in the solution decreased rapidly when the residue input amount was up to 300 g/L, and at 300 g/L, the initial lithium concentration decreased from 24.6 g/L to 4.4 g/L. However, above 400g/L, the lithium concentration did not decrease any further and tended to increase slightly. This result indicates that the dissolved lithium ion was recovered through reaction or ion exchange with the input material (residue).

In addition, potassium and sodium concentrations showed little change up to 200 g/L, and tended to decrease beyond that. In this way, the lithium concentration in the solution decreases, and the potassium and sodium concentrations remain unchanged, showing that the added material (residue) is selectively recovering lithium.

**(Table 3)**

| Input (g/L) | Time (hr) | Concentration (g/L) | | | | | |
|---|---|---|---|---|---|---|---|
| | | Li | S | K | Na | Si | Al |
| Undiluted solution | | 24.6 | 6.1 | 6.0 | 17.7 | 0.01 | - |
| 100 | 3 | 16.8 | 9.4 | 6.3 | 18.1 | 0.1 | 0.7 |
| | 5 | 16.5 | 9.3 | 6.2 | 18.2 | 0.1 | 0.6 |
| | 7 | 15.7 | 9.2 | 6.2 | 17.7 | 0.1 | 0.7 |
| 200 | 3 | 9.3 | 12.3 | 6.2 | 17.5 | 0.4 | 0.8 |
| | 5 | 8.5 | 12.3 | 6.2 | 17.5 | 0.4 | 0.7 |
| | 7 | 7.9 | 12.5 | 6.4 | 17.7 | 0.4 | 0.7 |
| 300 | 3 | 6.0 | 15.4 | 5.5 | 16.0 | 0.9 | 0.2 |
| | 5 | 5.0 | 15.1 | 5.2 | 15.3 | 0.9 | 0.1 |
| | 7 | 4.4 | 14.8 | 4.9 | 14.6 | 0.9 | 0.1 |
| 400 | 3 | 6.4 | 20.7 | 4.4 | 15.2 | 0.9 | 0.1 |
| | 5 | 6.2 | 21.2 | 4.0 | 14.5 | 0.9 | 0.1 |
| | 7 | 5.9 | 21.0 | 3.7 | 13.8 | 0.8 | 0.1 |
| 500 | 3 | 6.9 | 23.8 | 3.0 | 12.3 | 0.7 | 0.1 |
| | 5 | 7.0 | 24.3 | 2.5 | 11.4 | 0.6 | - |
| | 7 | 7.3 | 24.7 | 2.3 | 11.1 | 0.6 | - |

FIG. 2 shows the Na/Li ratio in the liquid filtrate according to the amount of material remaining (residue) after lithium leaching when reacting for 7 hours to recover lithium ions in the solution according to an exemplary embodiment. As shown in FIG. 2. an initial Na/Li ratio without residue added was 0.7, and as the amount of residue added increases, the Na/Li ratio in the remaining liquid filtrate after lithium is recovered increases. When the residue amount was 300 g/L, the Na/Li ratio in the liquid filtrate reached its maximum at 3.3, and when the residue amount exceeded 300 g/L, the Na/Li ratio in the liquid filtrate decreased. Therefore, it can be seen that when the amount of residue input is increased to a certain level, the amount of remaining lithium in the filtrate decreases and the amount of lithium recovered in the residue increases.

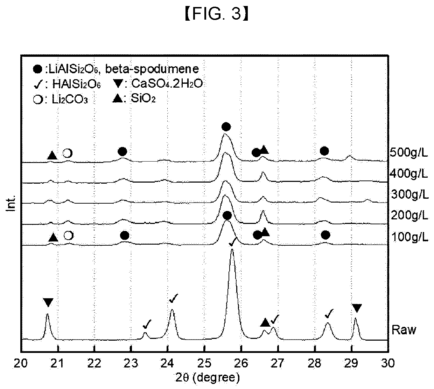

FIG. 3 is the mineral phase analysis result of the slurry phase material in which lithium was recovered after 7 hours of reaction to recover lithium ions in the solution according to an exemplary embodiment, and it can be confirmed that LiAlSi₂O₆ was generated. From this, it can be confirmed that the residue absorbed lithium and formed a cake containing lithium. However, it is believed that lithium recovery by mechanisms other than LiAlSi₂O₆ may also have an effect.

### (Example embodiment 2) Dissolution and recovery of lithium ions from lithium-containing material (cake)

In the exemplary embodiment 1, 5 g of the cake, which was filtered using a filtration device after 7 hours of slurry at an input amount of 300 g/L, was added to 300 mL of 0.4N sulfuric acid solution and stirred at 300 rpm for 30 minutes to dissolve lithium ions.

At this time, the reaction temperature was variously selected from 25 to 90°C, the contents of lithium and impurity in the solution were measured, and the results are listed in Table 4 below. As can be seen from the following Table 4 and the Table 2, the Li/Na ratio in the initial solution in Table 2 was 1.39 and the Li/K ratio was 4.1, and the Li/Na ratio at 25 °C in Table 4 was with 3.11 and Li/K ratio was 7.8. It can be seen that the impurity ratio was greatly improved by 2.2 times for Na and 1.9 times for K

At this time, the lithium concentration increases slightly as the temperature increases, but it can be seen that most ion concentrations, including lithium, are hardly affected by temperature. From this result, it can be confirmed that lithium can be selectively recovered from a solution in which lithium and impurity are dissolved.

**(Table 4)**

| Temperatu re (°C) | Concentration (g/L) | | | | | | |
|---|---|---|---|---|---|---|---|
| | Li | S | Ca | K | Na | Si | Al |
| 25 | 0.554 | 6.343 | 0.347 | 0.071 | 0.178 | 0.746 | 0.655 |
| 50 | 0.565 | 6.419 | 0.340 | 0.069 | 0.174 | 0.671 | 0.638 |
| 70 | 0.569 | 6.466 | 0.339 | 0.070 | 0.177 | 0.646 | 0.651 |
| 90 | 0.585 | 6.519 | 0.352 | 0.072 | 0.182 | 0.578 | 0.684 |

## Claims

1. A method of recovery lithium ion, comprising:
adding a residue after leaching lithium from an ore containing spodumene into a solution in which a lithium ion is dissolved;
absorbing a lithium ion into the residue by reacting the solution containing the residue at 50-90°C; and
recovering a cake containing a lithium from the residue in which the lithium ion has been absorbed by performing solid-liquid separation.

2. The method of claim 1, wherein:
in the step of adding the residue, a constant amount of dried residue added is 100-500 g per 1L of solution in which a lithium ion is dissolved.

3. The method of claim 2, wherein:
in the step of adding the residue, the constant amount of dried residue added is 100-300 g per 1L of solution in which a lithium ion is dissolved.

4. The method of claim 1, wherein:
in the step of absorbing the lithium ion into the residue, the reaction is carried out for 0.5-7 hours.

5. The method of claim 1, wherein:
in the step of absorbing the lithium ion into the residue, the reaction is carried out at pH 7 or higher.

6. The method of claim 1, wherein:
in the solution in which a lithium ion is dissolved, the concentration of the lithium ion is 0.01-32 g/L.

7. The method of claim 1, wherein:
the solution in which the lithium ion is dissolved contains sodium and potassium as impurities, and the concentration of the impurity is 0.01-30g/L.

8. The method of claim 1, wherein:
the step of absorbing the lithium ion into the residue is carried out under stirring.

9. The method of claim 1, wherein:
the step of adding the residue is performed by adding the solution containing the lithium ion dissolved in a column filled with the residue.

10. The method of claim 1, wherein:
the residue after leaching a lithium from the ore containing spodumene is manufactured by a method including the steps below:
heating and then cooling the ore containing the spodumene;
mixing the cooled ore with sulfuric acid, heating and then cooling;
mixing the cooled product with water, stirring it, and then separating solid and liquid; and
washing the solid-liquid separated cake with distilled water and drying it.

11. The method of claim 1, wherein:
the residue comprises:
0 to 1 wt% lithium (Li),
5 to 20 wt% aluminum (Al),
20 to 40 wt% of silicon (Si),
0 to 1 wt% magnesium (Mg),
0 to 5 wt% calcium (Ca),
0 to 1 wt% sodium (Na),
0 to 1 wt% potassium (K),
0 to 5 wt% sulfur (S),
0 to 1 wt% of manganese (Mn),
0 to 1 wt% iron (Fe),
0 to 1 wt% phosphorus (P).

12. The method of claim 1, further comprising:
a step of removing the layer water from the lithium-containing cake using distilled water.

13. The method of claim 1, further comprising:
a step of dissolving the lithium ion by dissolving the lithium-containing cake into an inorganic acid solution to dissolve the lithium from the cake.

14. The method of claim 13, wherein:
the inorganic acid is any one selected from the group consisting of sulfuric acid, hydrochloric acid, or nitric acid.

15. The method of claim 1, further comprising:
a step of mixing the lithium-containing cake with high concentration sulfuric acid, heat treating it at 150-300°C, and then adding it to distilled water to dissolve the lithium ion.

16. The method of claim 15, wherein:
the heat treatment is performed for more than 10 minutes.
